# EUROPEAN PATENT SPECIFICATION

(11) **EP 4 231 423 B1**
(45) Date of publication and mention of the grant of the patent: **08.10.2025**
(21) Application number: 22784926.2
(22) Date of filing: 05.04.2022
(51) Int. Cl.: H01M 50/242, H01M 10/04, H01M 50/249, H01M 50/211, H01M 50/231, H01M 50/24, H01M 10/647, H01M 50/105, H01M 50/20, H01M 50/209, H01M 50/264, H01M 50/291, H01M 50/293

(54) **BATTERY MODULE INCLUDING COMPRESSION PAD HAVING IMPROVED INSULATION AND ASSEMBLY, BATTERY PACK AND VEHICLE INCLUDING THE SAME**
BATTERIEMODUL MIT KOMPRESSIONSPAD ZUR VERBESSERUNG DER ISOLATION UND MONTIERBARKEIT, BATTERIEPACK DAMIT UND FAHRZEUG
MODULE DE BATTERIE COMPORTANT UN COUSSIN DE COMPRESSION POUR AMÉLIORER L'ISOLATION ET L'ASSEMBLAGE, BLOC-BATTERIE LE COMPRENANT, ET VÉHICULE

(30) Priority: 05.04.2021 KR 20210044324
(43) Date of publication of application: 23.08.2023
(73) Proprietor: LG Energy Solution, Ltd., Seoul 07335 (KR)
(72) Inventor: LEE, Hyun-Jae, Daejeon 34122 (KR); PARK, Jun-Kyu, Daejeon 34122 (KR); CHOI, Yong-Joon, Daejeon 34122 (KR)
(74) Representative: Goddar, Heinz J.
(86) International application number: PCT/KR2022/004898
(87) International publication number: WO 2022/216017

(56) References cited:
- WO-A1-2020/194938
- WO-A1-2020/262080
- CN-A- 109 643 778
- CN-A- 111 492 532
- JP-A- 2013 500 570
- KR-A- 20200 002 349
- KR-A- 20200 008 624
- KR-A- 20210 007 244
- KR-A- 20210 007 244
- KR-A- 20210 020 665

## Description

### TECHNICAL FIELD

The present disclosure relates to a battery module, and more particularly, to a battery module improved to enhance insulation and assembly between a cell stack and a frame member. The present disclosure also relates to a battery pack and a vehicle including the battery module.

### BACKGROUND ART

A secondary battery that is easy to apply according to product groups and has electrical characteristics such as high energy density is widely used for electric vehicles or hybrid vehicles driven by an electric driving source, energy storage systems, and the like, as well as portable devices. The secondary battery is in the spotlight as a new energy source for improving eco-friendliness and energy efficiency in that it has not only the primary advantage of dramatically reducing the use of fossil fuels but also no by-products generated from the use of energy.

One or two to four cells per device are used in small mobile devices, whereas medium/large devices such as vehicles, or the like require high output and large capacity. Therefore, a medium/large battery module including a cell stack in which a plurality of cells are electrically connected is used. Since it is preferable to manufacture the medium/large battery module as small as possible in size and weight, prismatic cells, pouch-type cells, and the like that may be stacked with a high degree of integration and have a small weight to capacity are mainly used as a unit cell of the medium/large battery module.

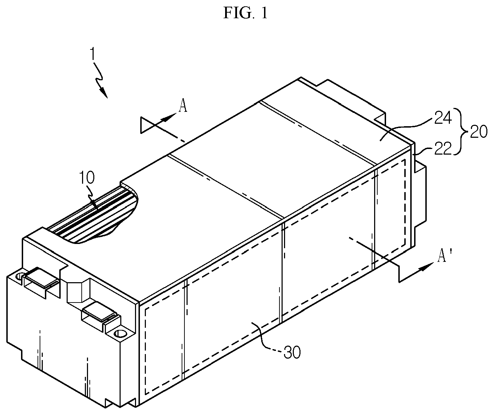

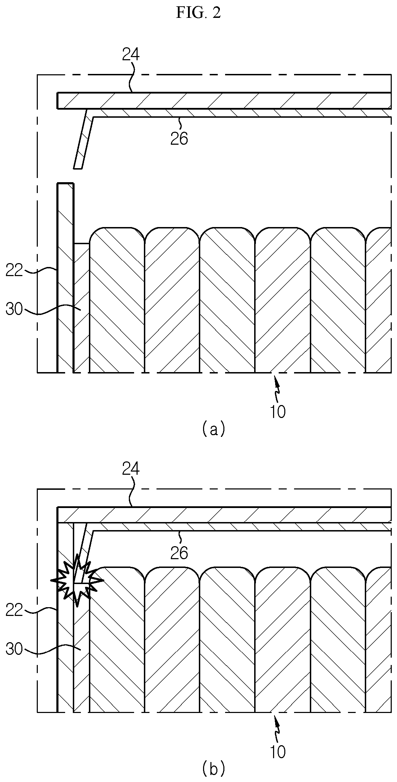

Meanwhile, the battery module includes a frame member for accommodating the cell stack in an internal space to protect the cell stack from external impact, heat, or vibration. FIG. 1 is a perspective view illustrating a conventional battery module, and FIG. 2 is an exploded and assembled cross-sectional view taken along line A-A' of FIG. 1.

Referring to FIGS. 1 and 2, in the conventional battery module 1, a frame member 20 accommodating a cell stack 10 includes a case 22 and a cover 24. A buffer member 30 is provided between the cell stack 10 and the case 22.

The buffer member 30 is compressed according to the expansion of the cell due to swelling to absorb the swelling or to protect the cell stack 10 from external impact or vibration. An insulator is additionally inserted into the main region inside the frame member 20 to ensure insulation from the cell stack 10. For example, in the battery module 1 shown in FIG. 1, a film 26 in the shape of an eaves for protecting the edge of the cell stack 10 is added to the inside of the cover 24.

When the cell stack 10 is placed in the case 22 and then the cover 24 is assembled on the cell stack 10 as shown in FIG. 2 (a), the eaves-shaped film 26 is vulnerable to interference in the assembly process, which may cause deformation or damage to the film 26 while colliding with the buffer member 30 or the cell stack 10 as shown in FIG. 2 (b). In addition, in the battery module 1 having such a structure, a region exposed locally due to assembly or process is inevitably present, which is a matter related to safety and thus needs to be improved.

In particular, the sealing portion of the pouch-type cell is vulnerable to insulation due to the cutting process, and when the pouch-type cell is used as a cell constituting the cell stack 10, there is a task to continuously improve ensuring insulation for a cell located particularly close to the frame member 20, that is, the outermost cell.

KR 2021 000 7244 A discloses a battery module comprising a battery cell assembly including a plurality of battery cells stacked on each other; a pair of side plates provided on both sides of the battery cell assembly; and a pair of compression pads provided on both sides of the pair of side plates to be exposed on both outer most sides of the battery module and for absorbing swelling and assembly tolerance of the battery cell assembly.

CN 109643778 A discloses a battery module provided with a plurality of stacked batteries; and a heat transfer suppressing member which is arranged between two adjacent batteries.

### DISCLOSURE

### Technical Problem

The present disclosure is designed to solve the problems of the related art, and therefore the present disclosure is directed to providing a battery module capable of ensuing insulation for an outermost cell of a cell stack and minimizing defects in assembling a cell stack and a frame member.

However, technical problems to be solved by the present disclosure are not limited to the above-described problems, and other problems not mentioned herein may be clearly understood by one of ordinary skill in the art from the following description of the present disclosure.

### Technical Solution

In one aspect of the present disclosure for solving the technical problem described above, there is provided a battery module including a cell stack in which a plurality of cells are stacked; and a compression pad provided on an outer surface of the cell stack, wherein the compression pad is a laminate of an elastic pad and a synthetic resin film attached to at least one surface of the elastic pad, wherein the synthetic resin film includes a length extension portion longer than the elastic pad in length, and the length extension portion is folded to cover and protect the upper surface of the cell stack.

The cell may be a pouch-type cell including a sealing portion, and the length extension portion may be folded to cover the sealing portion.

The elastic pad may be polyurethane foam and the synthetic resin film may be PET.

The compression pads may be respectively attached to the outer large-area portions of both outermost cells of the cell stack, and the length extension portions positioned at both sides of the cell stack may be respectively folded toward the inside of the cell stack to protect both upper edges of the cell stack.

Herein, the length extension portions folded from both sides of the cell stack may not meet or overlap each other on the upper surface of the cell stack.

The elastic pad of the compression pad may be located inwardly toward the cell and the synthetic resin film may be located outside.

The battery module according to an embodiment of the present disclosure may further include a U-shaped frame accommodating the cell stack and having an open top; and a top plate covering the cell stack at the top of the open U-shaped frame, wherein a surface of the cell stack perpendicular to a stacking direction of the plurality of cells may be mounted on the bottom of the U-shaped frame, and a member interfering with the cell may not exist between the top plate and the cell stack.

The top plate and the cell stack may be spaced apart.

The elastic pad of the compression pad may be adhered to one surface of the cell through an adhesive, and the length extension portion may be adhered to the upper surface of the cell through an additional adhesive.

Herein, the adhesive may be provided in one or more places in the form of a band extending along the longitudinal direction of the cell.

The battery module may further include additional compression pads provided between the cells in the cell stack.

The additional compression pads may be disposed between each cell group including a predetermined number of cells.

Meanwhile, in another aspect of the present disclosure, there are provided a battery pack and a vehicle including the battery module according to the present disclosure as described above.

### Advantageous Effects

According to one aspect of the present disclosure, the compression pad is a laminate of an elastic pad and a synthetic resin film, and the length of the synthetic resin film of the compression pad attached to the outermost portion is increased longer than that of the elastic pad, so that the length extension portion covers the edge of the upper surface of the cell stack. Accordingly, it is possible to additionally ensure insulation from a section that is inevitably exposed due to the assembly process of the cell stack and the frame member.

In particular, when the cell included in the battery module is a pouch-type cell, the length extension portion of the synthetic resin film of the compression pad of the present disclosure may minimize the exposed portion of the cutting surface of the sealing portion of the cell or the cell folding portion, thereby improving insulation performance.

In addition, according to one aspect of the present disclosure, there is no need to insert an additional insulator to ensure insulation from the cell stack inside the frame member, thereby simplifying the structure of the frame member. As a result, when the cell stack is inserted into the frame member and assembled, defects due to interference may be minimized.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawings.
FIG. 1 is a perspective view illustrating a conventional battery module.
FIG. 2 is an exploded and assembled cross-sectional view taken along line A-A' of FIG. 1.
FIG. 3 is an exploded perspective view illustrating a battery module according to an embodiment of the present disclosure.
FIG. 4 is a perspective view illustrating a state in which components constituting the battery module of FIG. 3 are combined.
FIG. 5 is a view illustrating a battery cell applied to a battery module according to an embodiment of the present disclosure.
FIGS. 6a and 6b are views illustrating a cell stack applied to a battery module according to an embodiment of the present disclosure, wherein FIG. 6a is a perspective view illustrating a state before folding a length extension portion of a synthetic resin film of a compression pad, and FIG. 6b is a cross-sectional view taken along line B-B' of FIG. 6a.
FIGS. 7a and 7b are views illustrating a cell stack applied to a battery module according to an embodiment of the present disclosure, wherein FIG. 7a is a perspective view illustrating a state after folding a length extension portion of a synthetic resin film of a compression pad, and FIG. 7b is a cross-sectional view taken along line C-C' of FIG. 7a.
FIG. 8 is a side view and a front view illustrating a compression pad applied to a battery module according to an embodiment of the present disclosure.
FIG. 9 is a view illustrating a position of an adhesive on a compression pad applied to a battery module according to an embodiment of the present disclosure.
FIG. 10 is an exploded and assembled cross-sectional view illustrating a battery module according to an embodiment of the present disclosure when taken along the line C-C' of FIG. 7a.
FIG. 11 is a schematic view illustrating a battery pack according to an embodiment of the present disclosure.
FIG. 12 is a schematic view illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

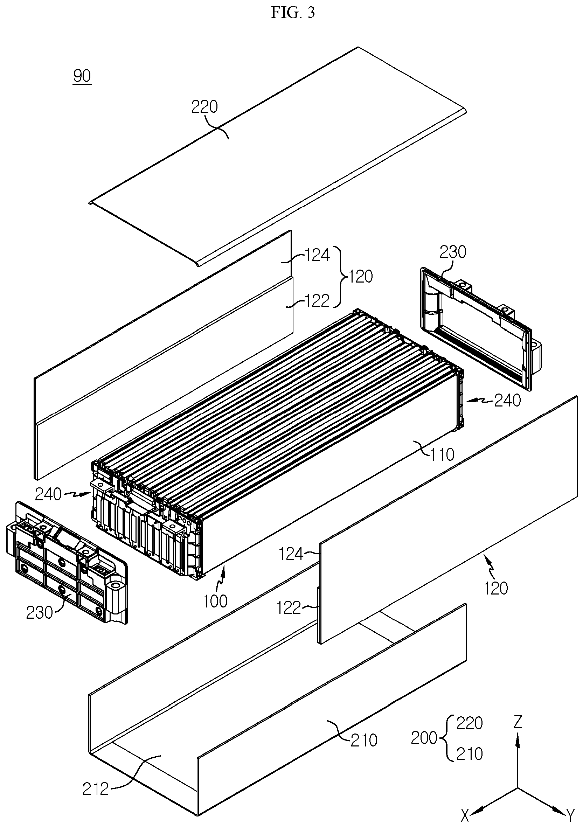

First, a battery module according to an embodiment of the present disclosure will be described with reference to FIGS. 3 to 5.

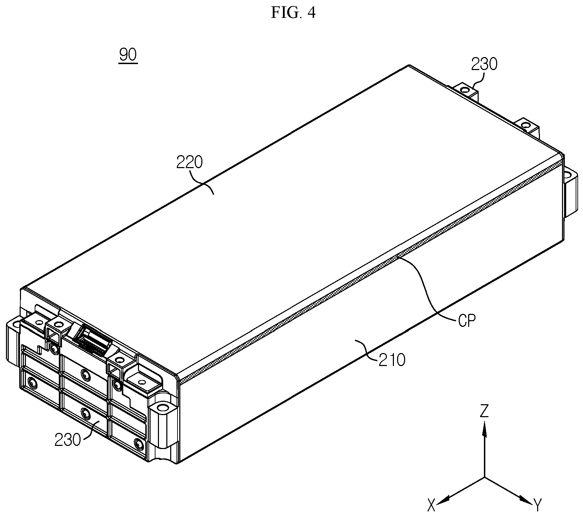

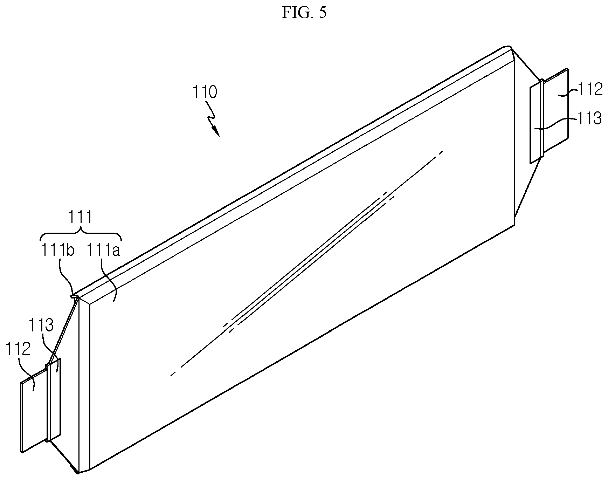

FIG. 3 is an exploded perspective view illustrating a battery module according to an embodiment of the present disclosure. FIG. 4 is a perspective view illustrating a state in which components constituting the battery module of FIG. 3 are combined. FIG. 5 is a view illustrating a battery cell applied to a battery module according to an embodiment of the present disclosure.

Referring to FIGS. 3 to 5, the battery module 90 according to an embodiment of the present disclosure includes a cell stack 100 and a frame member 200 accommodating the cell stack 100.

The cell stack 100 is formed by stacking a plurality of cells 110. The frame member 200 includes a U-shaped frame 210 accommodating the cell stack 100 and having an open top, and a top plate 220 covering the cell stack 100 at the top of the U-shaped frame 210. A surface of the cell stack 100 perpendicular to a stacking direction of the plurality of cells 110 is mounted on the bottom of the U-shaped frame 210.

The U-shaped frame 210 has an upper surface, a front surface, and a rear surface open. An end plate 230 may be positioned on the front and rear surfaces of the cell stack 100, respectively. Also, a bus bar frame 240 positioned between the cell stack 100 and the end plate 230 may be included.

When both open sides of the U-shaped frame 210 are referred to as the first side and the second side, respectively, the U-shaped frame 210 has a plate-shaped structure folded to continuously surround the front, lower and rear surfaces adjacent to each other among the remaining outer surfaces except for the surface of the cell stack 100 corresponding to the first side and the second side. The upper surface corresponding to the lower surface of the U-shaped frame 210 is open. A thermally conductive resin layer 212 may be formed on the bottom of the U-shaped frame 210.

The top plate 220 has a single plate-shaped structure surrounding the remaining upper surface except for the front, lower, and rear surfaces surrounded by the U-shaped frame 210. The U-shaped frame 210 and the top plate 220 may form a structure surrounding the cell stack 100 by being coupled through welding or the like in a state in which edge portions corresponding to each other are in contact with each other. That is, the U-shaped frame 210 and the top plate 220 may be coupled to the corresponding edge portions by a coupling method such as welding or the like to form a welding portion CP.

As the cell 110, for example, a pouch-type battery cell may be applied. When the cell 110 is the pouch-type battery cell mentioned above, as shown in FIG. 5, the cell 110 may be formed by including an electrode assembly (not shown), a pouch case 111, an electrode lead 112, and a sealing tape 113.

Although not shown in the drawings, it is preferable that the electrode assembly has separators interposed between the positive and negative electrode plates, which are alternately repeatedly stacked, and the separators are respectively positioned at the outermost portions of both sides for insulation.

The positive electrode plate includes a positive electrode current collector and a positive electrode active material layer coated on one surface thereof, and a positive electrode uncoated region on which a positive electrode active material is not coated is formed at one end thereof, wherein the positive electrode uncoated region functions as a positive electrode tab.

The negative electrode plate includes a negative electrode current collector and a negative electrode active material layer coated on one or both surfaces thereof, and a negative electrode uncoated region on which a negative electrode active material is not coated is formed at one end thereof, wherein the negative electrode uncoated region functions as a negative electrode tab.

In addition, the separator may be made of a porous material to allow ions to move by using an electrolyte as a medium between the positive electrode plate and the negative electrode plate while being interposed between the positive and negative electrode plates to prevent the electrode plates having different polarities from being in direct contact with each other.

The cell case 111 includes an accommodating portion 111a for accommodating the electrode assembly and a sealing portion 111b that extends in the circumferential direction of the accommodating portion 111a and seals the cell case 111 by thermally bonding and sealing in a state in which the electrode lead 112 is drawn to the outside.

Although not shown in the drawing, the cell case 111 is sealed by thermally bonding contact portions of each edges of the upper case and the lower case, which are made of a multi-layer pouch film where a resin layer/metal layer/resin layer are sequentially stacked.

The pair of electrode leads 112 are connected to a positive electrode tab (not shown) and a negative electrode tab (not shown), respectively, and are drawn out to the outside of the cell case 111. The pair of electrode leads 112 face each other and protrude from one end and the other end of the cell 110, respectively. A direction between both ends from which the electrode leads 112 protrude in the cell case 111 may be defined as a longitudinal direction of the cell 110.

The sealing tape 113 is attached to the periphery of the electrode lead 112, and is interposed between the inner surface of the sealing portion 111b of the pouch case 111 and the electrode lead 112. The sealing tape 113 prevents the sealing property of the sealing portion 111b from being weakened due to the withdrawal of the electrode lead 112.

The plurality of cells 110 may be stacked in the Y-axis direction as shown in FIG. 3. If the surface of the cell case 111 is slippery, the plurality of cells 110 tend to slide easily due to external impact when they are stacked. Therefore, in order to prevent this sliding and maintain a stable stack structure of the cells 110, an adhesive member such as an adhesive like a double-sided tape or a chemical adhesive bonded by a chemical reaction during adhesion may be attached to the surface of the cell case 111 to form the cell stack 100. In the present embodiment, the cell stack 100 is stacked in the Y-axis direction and accommodated in the U-shaped frame 210 in the Z-axis direction, so that cooling may be proceeded by the thermally conductive resin layer 212.

Before the cell stack 100 is mounted on the bottom of the U-shaped frame 210, a thermally conductive resin may be applied to the bottom of the U-shaped frame 210, and the thermally conductive resin may be cured to form the thermally conductive resin layer 212 shown in FIG. 3. Before the thermally conductive resin layer 212 is formed, that is, before the applied thermally conductive resin is cured, the cell stack 100 may be mounted on the bottom of the U-shaped frame 210 while moving in a direction perpendicular to the bottom of the U-shaped frame 210. Thereafter, the thermally conductive resin layer 212 formed by curing the thermally conductive resin is positioned between the bottom of the U-shaped frame 210 and the cell stack 100. The thermally conductive resin layer 212 may serve to transfer heat generated from the cell 110 to the bottom of the battery module 90 and to fix the cell stack 100.

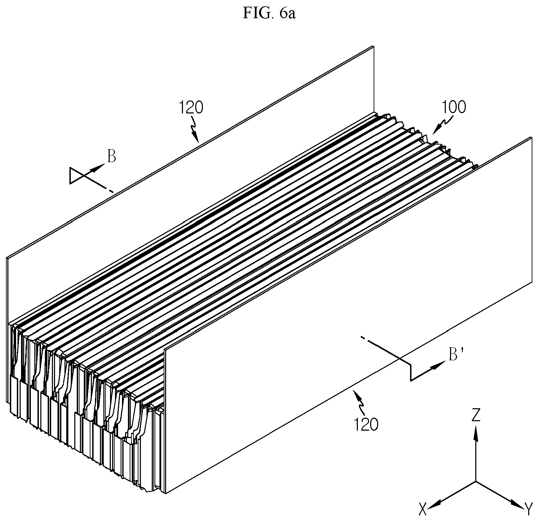

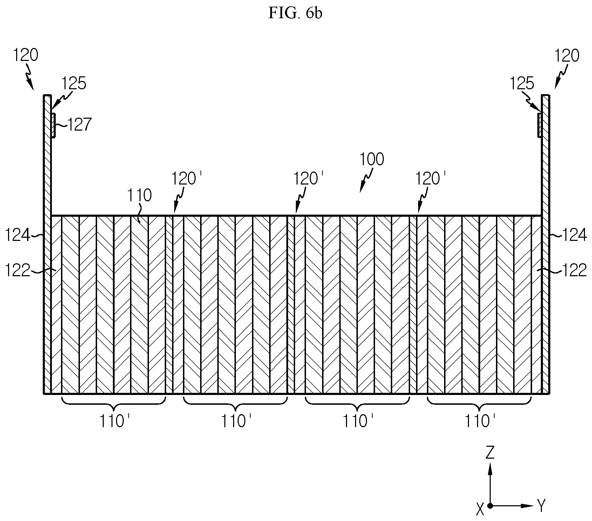

The sealing portion 111b of the cell 110 shown in FIG. 5 is a portion vulnerable to insulation because the resin layer/metal layer/resin layer of the cell case 111 is exposed to the cross section due to the cutting process. In the present disclosure, as shown in FIG. 3, a compression pad 120 is provided on the outer surface of the cell stack 100 to protect the sealing portion 111b. The compression pad 120 will be described in more detail with reference to FIGS. 6 to 9.

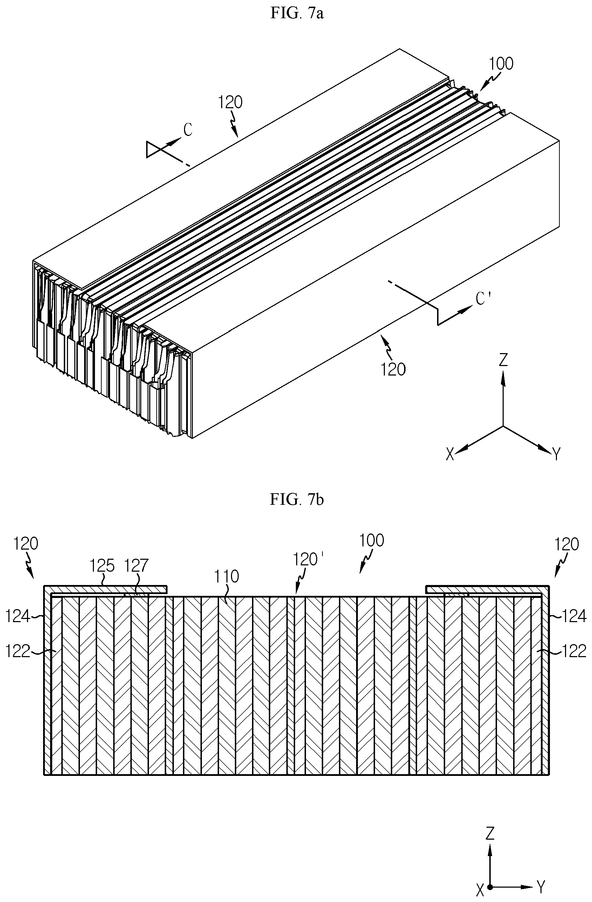

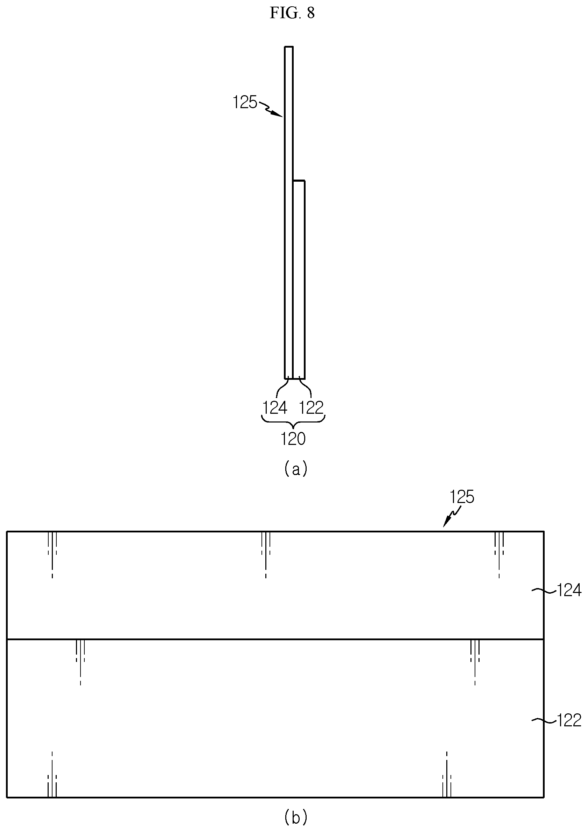

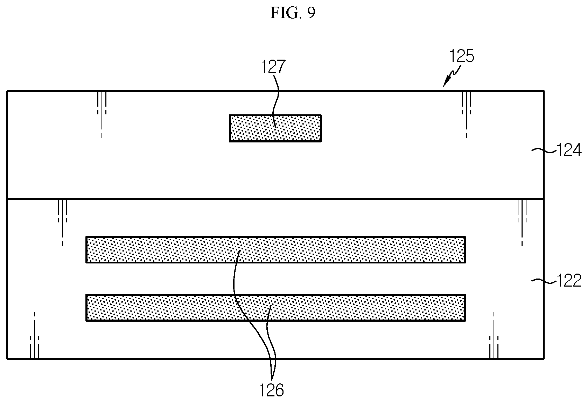

FIGS. 6a and 6b are views illustrating a cell stack applied to a battery module according to an embodiment of the present disclosure, wherein FIG. 6a is a perspective view illustrating a state before folding a length extension portion of a synthetic resin film of a compression pad, and FIG. 6b is a cross-sectional view taken along line B-B' of FIG. 6a. FIGS. 7a and 7b are views illustrating a cell stack applied to a battery module according to an embodiment of the present disclosure, wherein FIG. 7a is a perspective view illustrating a state after folding a length extension portion of a synthetic resin film of a compression pad, and FIG. 7b is a cross-sectional view taken along line C-C' of FIG. 7a. FIG. 8 is a side view and a front view illustrating a compression pad applied to a battery module according to an embodiment of the present disclosure. FIG. 9 is a view illustrating a position of an adhesive on a compression pad applied to a battery module according to an embodiment of the present disclosure.

As shown in FIGS. 3, 6 and 7, the compression pad 120 unique to the present disclosure is provided on the outer surface of the cell stack 100.

As shown in detail in FIG. 8, the compression pad 120 is a laminate of an elastic pad 122 and a synthetic resin film 124 attached to at least one surface of the elastic pad 122. In FIG. 8, (a) is a side view of the compression pad 120 and (b) is a front view thereof. The synthetic resin film 124 includes a length extension portion 125 having a longer length in the Z-axis direction compared to the elastic pad 122, and the length extension portion 125 is folded in the Y-axis direction to cover and protect the upper surface of the cell stack 100 as shown in FIG. 7a. In particular, when the cell 110 is a pouch-type battery cell, the length extension portion 125 may be folded to cover the sealing portion 111b. The lengths of the elastic pad 122 and the synthetic resin film 124 in the X-axis direction may be the same as each other, and the length thereof may be the same as that of the accommodating portion 111a of the cell case 111 of the cell 110 or that of the cell 110.

As shown in FIGS. 6a and 6b, the elastic pad 122 of the compression pad 120 may be positioned at the cell 110 toward the inside, and the synthetic resin film 124 may be positioned at the outermost side toward the outside. When swelling occurs in the cells 110 due to repeated charge/discharge of the battery module and thus the cells 110 are convexly expanded along the stacking direction (Y-axis direction), the elastic pad 122 may be compressed to absorb the swelling. Also, it is possible to absorb an impact from the outside. In consideration of this function, the elastic pad 122 may be made of an appropriate material having elasticity, and particularly, may be polyurethane foam.

The synthetic resin film 124 may minimize thermal movement transferred to the elastic pad 122. Also, it facilitates handling of the compression pad 120. Preferably, the synthetic resin film 124 may be provided with a material having very low thermal conductivity. The synthetic resin film 124 may be PET.

The compression pads 120 may be respectively attached to the outer large-area portions of both outermost cells 110 of the cell stack 100, and the length extension portions 125 positioned at both sides of the cell stack 100 may be respectively folded toward the inside of the cell stack 100 to protect both upper edges of the cell stack 100, respectively, as shown in FIGS. 7a and 7b. Herein, the length extension portions 125 folded from both sides of the cell stack 100 may not meet or overlap each other on the upper surface of the cell stack 100 as shown in FIGS. 7a and 7b. When other members are included on the upper surface of the cell stack 100, the length extension portions 125 do not meet or overlap each other on the upper surface of the cell stack 100, and thus may be disposed on an exposed portion.

The elastic pad 122 of the compression pad 120 may be adhered to one surface of the cell 110 through an adhesive 126, and the length extension portion 125 may be adhered to the upper surface of the cell 110 through an additional adhesive 127. Referring to FIG. 9, one or more adhesives 126 are provided in a band shape extending along the longitudinal direction of the cell 110. The adhesives 126, 127 may be double-sided tapes or adhesives.

Meanwhile, additional compression pads 120' may be further included between the cell 110 and the cell 110 in the cell stack 100 as shown in FIGS. 6a, 6b, 7a and 7b.

The additional compression pads 120' are interposed between the cells 110 adjacent to each other, and only one may be provided in order to minimize an increase in the thickness of the cell stack 100. Thus, when only one additional compression pad 120' is provided, it is preferable that the additional compression pad 120' is disposed at the center of the cell stack 100 in the stacking direction. This is to efficiently block the propagation of the thermal runaway phenomenon between adjacent cells 110.

A plurality of the additional compression pads 120' may be included in the cell stack 100. In this case, the additional compression pads 120' may be disposed between each cell group 110' including a predetermined number of cells as shown in FIGS. 6a, 6b, 7a and 7b. The number of cells 110 to be included in one cell group may be determined in consideration of the number of cells 110 included in the battery module, the capacity of the cells 110, the thickness of the additional compression pad 120', and the like.

As with the compression pad 120, the additional compression pad 120' may be a laminate of the elastic pad 122 and the synthetic resin film 124. In particular, the additional compression pad 120' may be a laminate of one elastic pad 122 and one synthetic resin film 124 as shown, but may have a sandwich structure having an elastic pad 122 in the middle and synthetic resin films 124 at both sides of the elastic pad 122, respectively. In the additional compression pad 120', the synthetic resin film 124 may have the same length as that of the elastic pad 122.

Meanwhile, the case in which the frame member 200 includes the U-shaped frame 210 and the top plate 220 has been described as an example in the embodiment of the present disclosure, and the U-shaped frame 210 has an upper surface, a front surface and a rear surface open, whereby handling is easy when the cell stack 100 is mounted. Since the top plate 220 and the cell stack 100 are spaced apart, it is easy to include other members on the upper surface of the cell stack 100.

Other structures of the frame member 200 may be used. For example, the frame member 200 may include a mono frame having a front surface and a rear surface open to cover the cell stack 100. In this case, after the compression pad 120 is adhered to the cell stack 100, the cell stack 100 may be inserted into the open front surface or rear surface of the mono frame to be assembled in a state where the length extension portion 125 is folded as shown in FIG. 7. For another example, the frame member 200 may include a first L-shaped frame accommodating the cell stack 100 and having the upper and one side open, and a second L-shaped frame accommodating the cell stack 100 and having the lower and one side open, wherein the first L-shaped frame and the second L-shaped frame may be engaged to surround four surfaces of the cell stack 100.

As described above, the compression pad 120 is a laminate of the elastic pad 122 and the synthetic resin film 124, and the length of the synthetic resin film 124 of the compression pad 120 attached to the outermost portion is increased longer than that of the elastic pad 122, so that the length extension portion 125 covers the edge of the upper surface of the cell stack 100. Accordingly, it is possible to additionally ensure insulation from a section that is inevitably exposed due to the assembly process of the cell stack 100 and the frame member 200, particularly, the top plate 220. In particular, when the cell 110 is a pouch-type cell, insulation performance may be improved by minimizing an exposed portion of the cutting surface of the sealing portion 111b or a cell folding portion obtained by folding the sealing portion 111b.

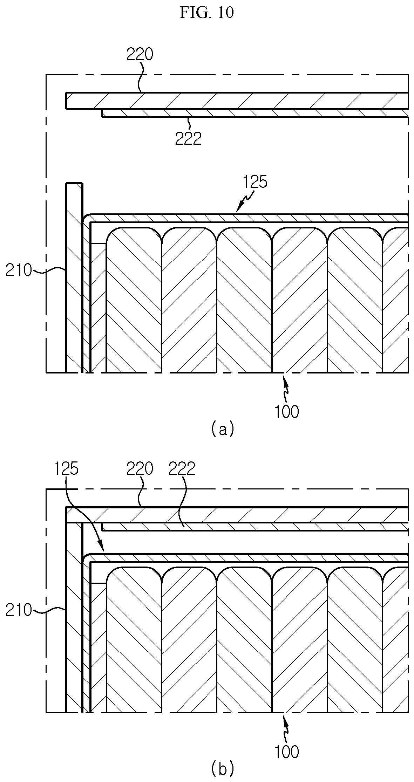

In addition, when the cell stack 100 is inserted into the U-shaped frame 210 and the top plate 220 is assembled, defects due to interference may be minimized. FIG. 10 is an exploded and assembled cross-sectional view illustrating a battery module according to an embodiment of the present disclosure when taken along the line C-C' of FIG. 7a. Referring to FIGS. 3 and 10 together, the top plate 220 and the cell stack 100 are spaced apart, and a member interfering with the cell 110 does not exist between the top plate 220 and the cell stack 100. Since the compression pad 120 has the length extension portion 125 of the synthetic resin film 124 to cover the edge of the upper surface of the cell stack 100, a film having an eaves structure or the like of the conventional battery module 1 is unnecessary. Even if the additional insulating film 222 is included, there is nothing to interfere with the cell 110 because it does not need to have an eaves structure and only needs to be flat.

In the conventional battery module 1, the film of the top plate has an eaves shape to protect the edge, but is very vulnerable to interference in the assembly process. In the present disclosure, it is possible to expect improvement in assembly by removing the corresponding shape. Even if the eaves shape for protecting the edge is removed from the film of the existing top plate, the length extension portion 125 of the synthetic resin film 124 of the compression pad 120 attached to the outermost portion of the cell stack 100 covers and protects the edge of the upper surface of the cell stack 100, thereby being not vulnerable to insulation.

As described above, according to the present disclosure, when a pouch-type cell is used as the cell 110 constituting the cell stack 100, it is very excellent in ensuring insulation with respect to the outermost cell 110 located particularly close to the frame member 200, and it is possible to minimize defects in the assembly of the cell stack 100 and the frame member 200.

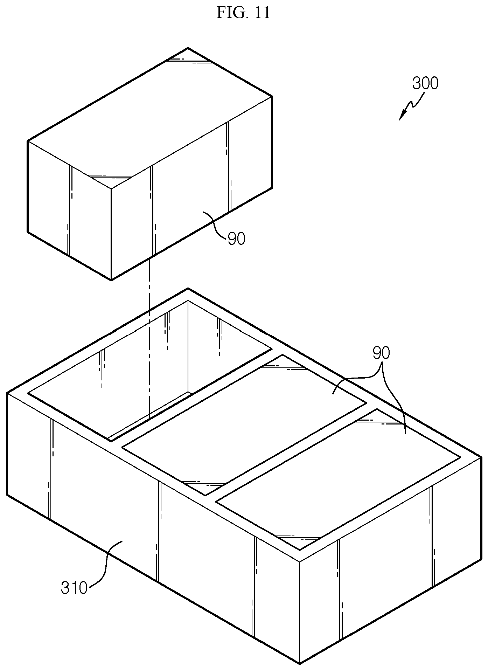

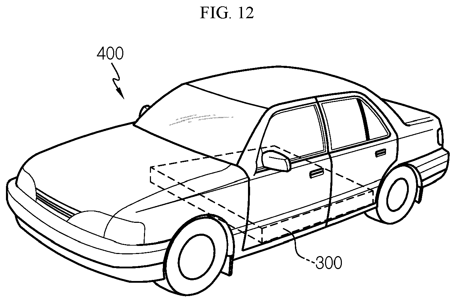

FIG. 11 is a schematic view illustrating a battery pack according to an embodiment of the present disclosure. The battery pack 300 is suitable to be used as a battery pack for an electric vehicle. FIG. 12 is a schematic view illustrating a vehicle according to an embodiment of the present disclosure.

Referring to FIGS. 11 and 12, the battery pack 300 may include at least one battery module 90 according to the above-described embodiment and a pack case 310 for packaging the at least one battery module 90.

In addition to the battery module 90 and the pack case 310, the battery pack 300 according to the present disclosure may further include various devices for controlling charge/discharge of the battery module 90, such as a BMS, a current sensor, a fuse, and the like.

The battery modules 90 have a substantially rectangular parallelepiped form, and may be arranged in an orderly manner in the battery pack case 310, wherein each of the battery modules 90 is connected to ensure the electric power required for driving a vehicle 400.

The battery pack case 310 is a container for fixing and accommodating the battery modules 90, and is a rectangular parallelepiped box. In addition, the battery pack case 310 may be disposed at a predetermined position in the vehicle 400.

Preferably, the vehicle 400 may be an electric vehicle. The battery pack 300 may be used as an electric energy source for driving the vehicle 400 by providing a driving force to the motor of the electric vehicle. In this case, the battery pack 300 has a high nominal voltage of 100 V or more.

The battery pack 300 may be charged or discharged by an inverter according to the driving of a motor and/or an internal combustion engine. The battery pack 300 may be charged by a regenerative charging device coupled to a brake. The battery pack 300 may be electrically connected to a motor of the vehicle 400 through an inverter. Also, it is obvious that the battery pack 300 may be provided in other devices, appliances, facilities, and the like, such as an energy storage system (ESS) using a secondary battery in addition to the vehicle.

As described above, the battery pack 300 according to the present embodiment, and the devices, appliances, and facilities such as the vehicle 400 including the battery pack 300 includes the battery module 90 described above, so that the battery pack 300 having all the advantages due to the above-described battery module 90, and the devices, appliances, and facilities such as the vehicle 400 including the battery pack 300 may be implemented.

Meanwhile, the terms indicating directions as used herein such as upper, lower, front, rear, left, and right are used for convenience of description only, and it is obvious to one of ordinary skill in the art that the term may change depending on the position of the stated element or an observer.

The present disclosure has been described in detail. However, it should be understood that the detailed description and specific examples, while indicating preferred embodiments of the present disclosure, are given by way of illustration only, since various changes and modifications within the scope of the present disclosure defined by the appended claims will become apparent to those skilled in the art from this detailed description.

## Claims

1. A battery module (90) comprising:
a cell stack (100) in which a plurality of cells (110) are stacked; and
a compression pad (120) provided on an outer surface of the cell stack (100),
wherein the compression pad (120) is a laminate of an elastic pad (122) and a synthetic resin film (124) attached to at least one surface of the elastic pad (122),
**characterized in that** the synthetic resin film (124) comprises a length extension portion (125) longer than the elastic pad (122) in length, and the length extension portion (125) is folded to cover and protect the upper surface of the cell stack (100).

2. The battery module (90) according to claim 1,
wherein the cell (110) is a pouch-type cell comprising a sealing portion, and the length extension portion (125) is folded to cover the sealing portion.

3. The battery module (90) according to claim 1,
wherein the elastic pad (122) is polyurethane foam and the synthetic resin film (124) is PET.

4. The battery module (90) according to claim 1,
wherein the compression pads (120) are respectively attached to the outer large-area portions of both outermost cells (110) of the cell stack (100), and the length extension portions (125) positioned at both sides of the cell stack (100) are respectively folded toward the inside of the cell stack (100) to protect both upper edges of the cell stack (100).

5. The battery module (90) according to claim 4,
wherein the length extension portions (125) folded from both sides of the cell stack (100) do not meet or overlap each other on the upper surface of the cell stack (100).

6. The battery module (90) according to claim 1,
wherein the elastic pad (122) of the compression pad (120) is located inwardly toward the cell (110) and the synthetic resin film (124) is located outside.

7. The battery module (90) according to claim 1, further comprising:
a U-shaped frame (210) accommodating the cell stack (100) and having an open top; and
a top plate (220) covering the cell stack (100) at the top of the open U-shaped frame (210),
wherein a surface of the cell stack (100) perpendicular to a stacking direction of the plurality of cells (110) is mounted on the bottom of the U-shaped frame (210), and
a member interfering with the cell (110) does not exist between the top plate (220) and the cell stack (100).

8. The battery module (90) according to claim 7,
wherein the top plate (220) and the cell stack (100) are spaced apart.

9. The battery module (90) according to claim 1,
wherein the elastic pad (122) of the compression pad (120) is adhered to one surface of the cell (110) through an adhesive (126), and the length extension portion (125) is adhered to the upper surface of the cell (110) through an additional adhesive (127).

10. The battery module (90) according to claim 9,
wherein the adhesive (126) is provided in one or more places in the form of a band extending along the longitudinal direction of the cell (110).

11. The battery module (90) according to claim 1, further comprising
additional compression pads (120') provided between the cells (110) in the cell stack (100).

12. The battery module (90) according to claim 11,
wherein the additional compression pads (120') are disposed between each cell group comprising a predetermined number of cells.

13. A battery pack (300) comprising a battery module (90) according to any one of claims 1 to 12.

14. A vehicle (400) comprising a battery module (90) according to any one of claims 1 to 12.

## Patentansprüche

1. Batteriemodul (90), umfassend:
einen Zellenstapel (100), in dem eine Vielzahl von Zellen (110) gestapelt sind; und
ein Kompressionskissen (120), das auf einer Außenfläche des Zellenstapels (100) bereitgestellt ist,
wobei das Kompressionskissen (120) ein Laminat aus einem elastischen Kissen (122) und einem Kunstharzfilm (124) ist, der an mindestens einer Fläche des elastischen Kissens (122) angebracht ist,
**dadurch gekennzeichnet, dass** der Kunstharzfilm (124) einen Längenverlängerungsabschnitt (125) umfasst, der in der Länge länger als das elastische Kissen (122) ist, und der Längenverlängerungsabschnitt (125) gefaltet ist, um die obere Fläche des Zellenstapels (100) abzudecken und zu schützen.

2. Batteriemodul (90) nach Anspruch 1,
wobei die Zelle (110) eine beutelartige Zelle ist, die einen Dichtungsabschnitt umfasst, und der Längenverlängerungsabschnitt (125) gefaltet ist, um den Dichtungsabschnitt abzudecken.

3. Batteriemodul (90) nach Anspruch 1,
wobei das elastische Kissen (122) Polyurethanschaum ist und der Kunstharzfilm (124) PET ist.

4. Batteriemodul (90) nach Anspruch 1,
wobei die Kompressionskissen (120) jeweils an den äußeren großflächigen Abschnitten beider äußersten Zellen (110) des Zellenstapels (100) angebracht sind, und die Längenverlängerungsabschnitte (125), die an beiden Seiten des Zellenstapels (100) positioniert sind, jeweils zur Innenseite des Zellenstapels (100) gefaltet sind, um beide oberen Kanten des Zellenstapels (100) zu schützen.

5. Batteriemodul (90) nach Anspruch 4,
wobei die Längenverlängerungsabschnitte (125), die von beiden Seiten des Zellenstapels (100) gefaltet sind, einander auf der oberen Fläche des Zellenstapels (100) nicht treffen oder überlappen.

6. Batteriemodul (90) nach Anspruch 1,
wobei das elastische Kissen (122) des Kompressionskissens (120) nach innen zur Zelle (110) hin angeordnet ist und der Kunstharzfilm (124) außerhalb angeordnet ist.

7. Batteriemodul (90) nach Anspruch 1, ferner umfassend:
einen U-förmigen Rahmen (210), der den Zellenstapel (100) aufnimmt und eine offene Oberseite aufweist; und
eine obere Platte (220), die den Zellenstapel (100) an der Oberseite des offenen U-förmigen Rahmens (210) abdeckt,
wobei eine Oberfläche des Zellenstapels (100) senkrecht zu einer Stapelrichtung der Vielzahl von Zellen (110) an der Unterseite des U-förmigen Rahmens (210) montiert ist, und
ein Element, das mit der Zelle (110) interferiert, nicht zwischen der oberen Platte (220) und dem Zellenstapel (100) vorhanden ist.

8. Batteriemodul (90) nach Anspruch 7,
wobei die obere Platte (220) und der Zellenstapel (100) voneinander beabstandet sind.

9. Batteriemodul (90) nach Anspruch 1,
wobei das elastische Kissen (122) des Kompressionskissens (120) durch einen Klebstoff (126) an eine Fläche der Zelle (110) geklebt ist und der Längenverlängerungsabschnitt (125) durch einen zusätzlichen Klebstoff (127) an die obere Fläche der Zelle (110) geklebt ist.

10. Batteriemodul (90) nach Anspruch 9,
wobei der Klebstoff (126) an einer oder mehreren Stellen in Form eines Bandes vorgesehen ist, das sich entlang der Längsrichtung der Zelle (110) erstreckt.

11. Batteriemodul (90) nach Anspruch 1, ferner umfassend
zusätzliche Kompressionskissen (120'), die zwischen den Zellen (110) im Zellenstapel (100) bereitgestellt sind.

12. Batteriemodul (90) nach Anspruch 11,
wobei die zusätzlichen Kompressionskissen (120') zwischen jeder Zellengruppe angeordnet sind, die eine vorbestimmte Anzahl von Zellen umfasst.

13. Batteriepack (300), umfassend ein Batteriemodul (90) nach einem der Ansprüche 1 bis 12.

14. Fahrzeug (400), umfassend ein Batteriemodul (90) nach einem der Ansprüche 1 bis 12.

## Revendications

1. Module de batterie (90) comprenant :
un empilement de cellules (100) dans lequel une pluralité de cellules (110) sont empilées ; et
un coussinet de compression (120) pratiqué sur une surface extérieure de l'empilement de cellules (100),
le coussinet de compression (120) étant un stratifié composé d'une semelle élastique (122) et d'un film de résine synthétique (124) fixé sur au moins une surface de la semelle élastique (122),
**caractérisé en ce que** le film de résine synthétique (124) comprend une partie d'extension longitudinale (125) plus longue que la semelle élastique (122) sur le plan de la longueur, et la partie d'extension longitudinale (125) étant pliée pour couvrir et protéger la surface supérieure de l'empilement de cellules (100).

2. Module de batterie (90) selon la revendication 1,
la cellule (110) étant une cellule de type à poche comprenant une partie de scellement, et la partie d'extension longitudinale (125) étant pliée pour couvrir la partie d'étanchéité.

3. Module de batterie (90) selon la revendication 1,
la semelle élastique (122) étant en mousse de polyuréthane et le film de résine synthétique (124) étant en PET.

4. Module de batterie (90) selon la revendication 1,
les coussinets de compression (120) étant respectivement fixés aux parties de grande superficie extérieures des deux cellules extérieures (110) de l'empilement de cellules (100), et les parties d'extension longitudinale (125) positionnées des deux côtés de l'empilement de cellules (100) étant respectivement pliées vers l'intérieur de l'empilement de cellules (100) pour protéger les deux bords supérieurs de l'empilement de cellules (100).

5. Module de batterie (90) selon la revendication 4,
les parties d'extension longitudinale (125) pliées des deux côtés de l'empilement de cellules (100) ne se rencontrant ou ne se chevauchant pas sur la surface supérieure de l'empilement de cellules (100).

6. Module de batterie (90) selon la revendication 1,
la semelle élastique (122) du coussinet de compression (120) étant située vers l'intérieur en direction de la cellule (110), et le film de résine synthétique (124) étant situé à l'extérieur.

7. Module de batterie (90) selon la revendication 1, comprenant en outre:
un châssis en U (210) contenant l'empilement de cellules (100) et possédant un dessus ouvert ; et
une plaque supérieure (220) recouvrant l'empilement de cellules (100) sur le dessus du châssis en U ouvert (210),
une surface de l'empilement de cellules (100) perpendiculaire à une direction d'empilement de la pluralité de cellules (110) étant montée sur le fond du châssis en U (210), et
aucun élément nuisant à la cellule (110) n'existe entre la plaque supérieure (220) et l'empilement de cellules (100).

8. Module de batterie (90) selon la revendication 7,
la plaque supérieure (220) et l'empilement de cellules (100) étant espacés l'un de l'autre.

9. Module de batterie (90) selon la revendication 1,
la semelle élastique (122) du coussinet de compression (120) adhérant à une surface de la cellule (110) à l'aide d'un adhésif (126), et la partie d'extension longitudinale (125) adhérant à la surface supérieure de la cellule (110) à l'aide d'un adhésif supplémentaire (127).

10. Module de batterie (90) selon la revendication 9,
l'adhésif (126) étant agencé dans un ou plusieurs endroits sous la forme d'une bande s'étendant dans le sens longitudinal de la cellule (110).

11. Module de batterie (90) selon la revendication 1, comprenant en outre:
des coussinets de compression supplémentaires (120') agencés entre les cellules (110) dans l'empilement de cellules (100).

12. Module de batterie (90) selon la revendication 11,
les coussinets de compression supplémentaires (120') étant disposés entre chaque groupe de cellules comprenant un nombre prédéterminé de cellules.

13. Bloc-batterie (300) comprenant un module de batterie (90) selon une quelconque des revendications 1 à 12.

14. Véhicule (400) comprenant un module de batterie (90) selon une quelconque des revendications 1 à 12.
